# EUROPEAN PATENT SPECIFICATION

(11) **EP 3 287 395 B1**
(45) Date of publication and mention of the grant of the patent: **15.04.2020**
(21) Application number: 16783206.2
(22) Date of filing: 20.04.2016
(51) Int. Cl.: B65G 1/14, E04H 9/02, F16F 15/02, B65G 1/02

(54) **SEISMIC-ISOLATION DEVICE FOR RACK, AND RACK**
VORRICHTUNG ZUR SEISMISCHEN ISOLATION EINES GESTELLS SOWIE GESTELL
DISPOSITIF D'ISOLATION SISMIQUE POUR CRÉMAILLÈRE ET CRÉMAILLÈRE

(30) Priority: 20.04.2015 JP 2015086143
(43) Date of publication of application: 28.02.2018
(73) Proprietor: Oiles Corporation, Tokyo 108-0075 (JP)
(72) Inventor: FUNAYAMA, Yuji, Osaka-shi Osaka 545-8555 (JP); FUNAKI, Hidetaka, Osaka-shi Osaka 545-8555 (JP); KOYAMA, Yoshiki, Osaka-shi Osaka 545-8555 (JP); UEDA, Satoshi, Fujisawa-shi Kanagawa 252-0811 (JP)
(74) Representative: Strehl Schübel-Hopf & Partner
(86) International application number: PCT/JP2016/062549
(87) International publication number: WO 2016/171185

(56) References cited:
- JP-A- H11 247 925
- JP-A- H11 247 925
- JP-A- 2000 014 472
- JP-A- 2000 014 472
- JP-A- 2000 145 881
- JP-A- 2000 279 252
- JP-A- 2004 100 829
- JP-A- 2009 281 556
- JP-A- 2010 013 934
- JP-A- 2014 119 033
- JP-A- 2014 119 033
- JP-A- 2014 201 385
- JP-A- 2014 201 385
- JP-A- 2014 205 538
- US-A1- 2007 125 930
- US-A1- 2007 125 930
- US-A1- 2007 130 848

## Description

### Technical Field

The present invention relates to a rack comprising a seismic-isolation device for a rack, and, in particular, relates to a seismic-isolation device suitable for an automatic rack warehouse.

### Background Art

An automatic rack warehouse is popular, which automates, for example, work for picking a pallet loaded with goods by using an automatic transport equipment. In such an automatic rack warehouse, pallets are merely placed on respective storage shelves of the rack, without being fixed. Considering this, the Patent Literature 1 discloses a seismic-isolation device for an automatic rack warehouse, which can prevent propagation of vibration of an earthquake or the like to a pallet via a rack so that goods on the pallet does not fall.

This seismic-isolation device has a slope sliding bearing mechanism installed between a support member of a rack and a pallet. The slope sliding bearing mechanism comprises: a guide member which is fixed on the support member of the rack; and a pallet receiving member which is placed on the guide member movable in the loading/unloading direction of goods (pallet). On the upper surface of the guide member, a first inclined surface and a second inclined surface are formed. The first inclined surface is inclined gradually downward from one end of the loading/unloading direction toward the other end. The second inclined surface is inclined gradually downward from the other end of the loading/unloading direction toward the one end and is connected to the first inclined surface. Further, on the lower surface of the pallet receiving member, an arc-shaped projection is formed so as to come in contact with the first and second inclined surfaces formed on the upper surface of the guide member.

According to this seismic-isolation device, when vibration is applied to the rack by an earthquake or the like, the arc-shaped projection of the pallet receiving member which supports a pallet with goods, slides on the first and second inclined surfaces of the guide member alternately. Then, sliding motion of the pallet receiving member converges so that the center of the projection is located at the boundary between the first inclined surface and the second inclined surf ace. As a result, it is possible to absorb the vibration of the rack, so that propagation of the vibration to the pallet is prevented and the position of the pallet in relation to the rack is restored to the original position.

### Citation List

### Patent Literature

Patent Literature 1: JP 2014 201385 A discloses a rack according to the preamble of claim 1.

### Summary of Invention

### Technical Problem

In the seismic-isolation device described in the Patent Literature 1, the first and second inclined surfaces are formed on the upper surface of the guide member. The first inclined surface is inclined gradually downward from one end toward other end in the loading/unloading direction and the second inclined surface is inclined gradually downward from the other end toward the one end in the loading/unloading direction. Accordingly, dust or the like accumulates on the first and second inclined surfaces, by this, the sliding performance of the first and second inclined surface may become inferior and the desired seismic-isolation performance may not be obtained.

Further, in the seismic-isolation device described in the Patent Literature 1, the first inclined surface which is inclined gradually downward from the one end toward the other end in the loading/unloading direction and the second inclined surface which is inclined gradually downward from the other end toward the one end in the loading/unloading direction are continuously formed on the upper surface of the pallet receiving member. Accordingly, machining of the pallet receiving member is difficult, and thus machining cost becomes higher.

The present invention has been made considering the above situation, and an object of the present invention is to provide a seismic-isolation device for a rack which can maintain the seismic-isolation performance for a long term. Another object of the present invention is to provide a seismic-isolation device for a rack which can realize cost reduction. And yet another object of the present invention is to provide a rack employing these seismic-isolation devices.

### Solution to Problem

To solve the above problem, the present invention suggests the rack with seismic-isolation device as defined in Claim 1. Further advantageous features are set out in the dependent claims.

### Advantageous Effects of Invention

According to the present invention, the first inclined surface which is inclined upward from the one end of the loading/unloading direction toward the other end, and the second inclined surface which is inclined upward from the other end of the loading/unloading direction toward the one end, are formed on the lower surface of the rail bearing attached to the lower surface of the pallet base. Accordingly, it is possible to prevent accumulation of dust or the like on the first inclined surface and the second inclined surface. Because of this, it is possible to prevent deterioration of the sliding characteristics between the first and second inclined surfaces and the support member, and to maintain the seismic-isolation performance over a long term. Further, when the rail bearing is constructed by connecting the first rail having the first inclined surface formed on a lower surface of the first rail and the second rail having the second inclined surface formed on a lower surface of the second rail, machining of the first inclined surface and the second inclined surface becomes easy, and as a result the costs can be reduced.

### Brief Description of Drawings

Figs. 1(A), 1(B), and 1(C) are respectively a front view, a side view, and a top view of a rack 2 which employs seismic-isolation devices 1 according to one embodiment;
Fig. 2 is an enlarged A-A cross-section of seismic-isolation devices 1 of Fig. 1;
Fig. 3 is an enlarged B-B cross section view of seismic-isolation devices 1 of Fig. 1;
Fig. 4 is an enlarged view of the part C of the seismic-isolation device shown in Fig. 3;
Figs. 5(A) and 5(B) are diagrams for explaining operating principle of a seismic-isolation device 1 shown in Fig. 1; and
Figs. 6(A) and 6(B) are diagrams for explaining variations 111a and 111b of the shaft 111.

### Description of Embodiment

In the following, one embodiment will be described.

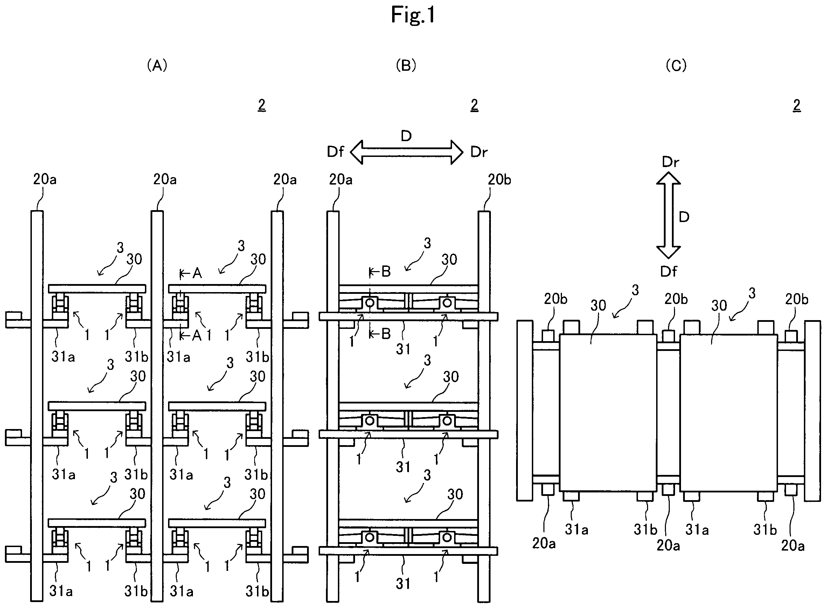

Figs. 1(A), 1(B), and 1(C) are respectively a front view, a side view, and a top view showing a rack 2 which employs seismic-isolation devices 1 according to one embodiment of the present invention.

As shown in the figures, the rack 2 has storage shelves 3 each storing a pallet (not shown) loaded with goods. This rack 2 is used in an automatic rack warehouse whose picking work and the like are automated. Here, in the rack 2, the storage shelves 3 are arranged in three rows and in two columns, although the invention is not limited to this. The rack 2 may have at least one storage shelf 3.

Each storage shelf 3 comprises : a pallet base 30 which is set movable in the loading/unloading direction D and on which the above-mentioned pallet (not shown) for loading with goods is placed; and a pair of arms 31a and 31b (hereinafter, also simply referred to as arms 31) which support the pallet base 30 from the lower surface side of the pallet base 30. Each arm 31 is a plate-like member extending in the loading/unloading direction D, and is fixed to a pair of support posts 20a and 20b which are arranged along the loading/unloading direction D. Further, the arms 31 are arranged at adjacent positions across the pallet base 30 that is to be supported.

Each seismic-isolation device 1 is installed between an arm 31 and a pallet base 30, and prevents propagation of vibration of an earthquake or the like from the rack 2 to the pallet base 30. Here, for each storage shelf 3, four seismic-isolation devices 1 are installed. That is to say, two seismic-isolation devices 1 are installed in the loading/unloading direction D between the arm 31a and the pallet base 30, and the other two seismic-isolation devices 1 are installed in the loading/unloading direction D between the arm 31b and the pallet base 30. However, the number of the installed seismic-isolation devices 1 for each storage shelf 3 is not limited to this.

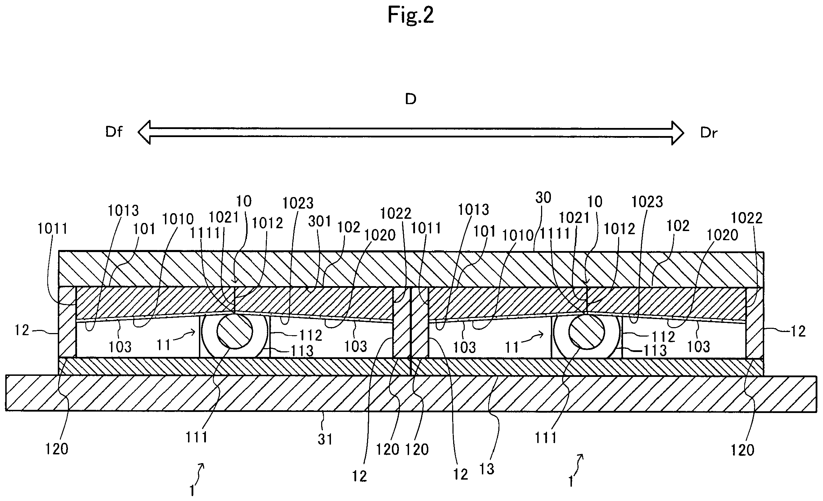

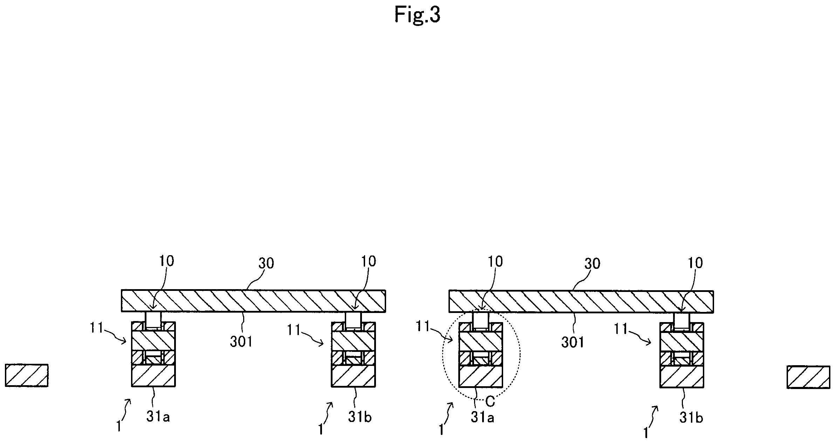

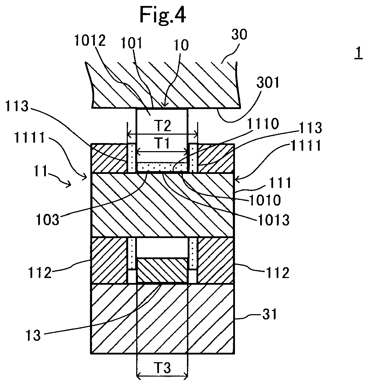

Fig. 2 is an enlarged A-A cross-section view of the seismic-isolation devices 1 of Fig. 1, Fig. 3 is an enlarged B-B cross-section view of the seismic-isolation devices 1 of Fig. 1, and Fig. 4 is an enlarged view of the part C of the seismic-isolation device 1 shown in Fig. 3.

As shown in the figures, the seismic-isolation device 1 comprises: a rail bearing 10 which is attached to the lower surface 301 of the pallet base 30; a support part 11 which is attached to an arm 31 and supports the rail bearing 10; a pair of stoppers 12 for confining the moving range of the rail bearing 10 in the loading/unloading direction D; and a fall prevention plate 13 for preventing falling of the rail bearing 10 from the rack 2.

The rail bearing 10 is constructed by connecting a first rail 101 and a second rail 102 in the loading/unloading direction D. On the lower surface 1010 of the first rail 101, a first inclined surface 1013 is formed. The first inclined surface 1013 is inclined linearly upward from one end 1011 (on the side of Df) toward other end 1012 (on the side of Dr) along the loading/unloading direction D. Further, on the lower surface 1020 of the second rail 102, a second inclined surface 1023 is formed so as to connect with the first inclined surface 1013 of the first rail 101. The second inclined surface 1023 is inclined linearly upward from other end 1022 (on the side of Dr) toward one end 1021 (on the side of Df) along the loading/unloading direction D. The first inclined surface 1013 of the first rail 101 and the second inclined surface 1023 of the second rail 102 are each made of a sliding member 103. Superior sliding characteristics are required of the sliding members 103. In detail, the sliding members 103 are required to have: a suitable friction coefficient under which movement of the rail bearing 10 with abutment of the stoppers 12 does not occur, in the case of small or medium degree of seismic vibration; durability for resisting change in physical properties caused, for example, by corrosion and deformation over a long term; and strength under which abrasion does not occur by vibration of several times of small or medium degree earthquakes. For example, synthetic resins such as polytetrafluoroethylene (PTFE), polyacetal (POM), and polyamide (PA), and metals such as bronze alloys are materials satisfying such conditions.

The support part 11 comprises: a cylindrical shaft 111 having a support surface 1110 which comes in sliding contact with the first inclined surface 1013 of the first rail 101 and the second inclined surface 1023 of the second rail 102; a pair of shaft holders 112 which are attached to the arms 31 and hold both ends 1111 of the shaft 111; and a pair of annular thrust bearings 113 mounted on the shaft 111.

The pair of shaft holders 112 are positioned apart from each other at a distance T2 larger than the width T1 of the rail bearing 10. The rail bearing 10 is inserted between these shaft holders 112 so that the support surface 1110 of the shaft 111 held by the shaft holders 112 comes in sliding contact with the first inclined surface 1013 of the first rail 101 and the second inclined surface 1023 of the second rail 102.

The thrust bearings 113 are each positioned between the rail bearing 10 and a shaft holder 112 to fill the gaps between them. By this, unsteadiness of the rail bearing 10 to the shaft holders 112 is eliminated while movement of the rail bearing 10 in the loading/unloading direction D is allowed. Also, superior sliding characteristics are required of the thrust bearings 113. In detail, the thrust bearings 113 are required to have: a suitable friction coefficient under which movement of the rail bearing 10 with abutment of the stoppers 12 does not occur, in the case of small or medium degree of seismic vibration; durability for resisting change in physical properties caused, for example, by corrosion and deformation over a long term; and strength under which abrasion does not occur by vibration of several times of small or medium degree earthquakes. For example, synthetic resins such as PTFE, POM, and PA are materials satisfying such conditions.

The pair of stoppers 12 are attached to respective ends of the rail bearing 10 (at the one end 1011 in the loading/unloading direction D of the first rail 101, and the other end 1022 in the loading/unloading direction D of the second rail 102), and project downward below the lower surfaces (the lower surface 1010 of the first rail 101 and the lower surface 1020 of the second rail 102) of the rail bearing 10. When the rail bearing 10 moves in the loading/unloading direction D in relation to the support part 11, the shaft 111 abuts against a stopper 12. By this, the moving range of the rail bearing 10 in the loading/unloading direction D is confined.

The fall prevention plate 13 has almost the same width T3 as the width T1 of the rail bearing 10, and is attached to the lower ends 120 of the pair of stoppers 12. As a result, the fall prevention plate 13 is positioned under the shaft 111, and is inserted in a space enclosed by the arm 31, the shaft 111, and the pair of shaft holders 112. When the rail bearing 10 moves upward in relation to the support part 11, the fall prevention plate 13 abuts against the shaft 111 so that upward movement of the rail bearing 10 is confined.

Next, the operating principle of the seismic-isolation device 1 will be described.

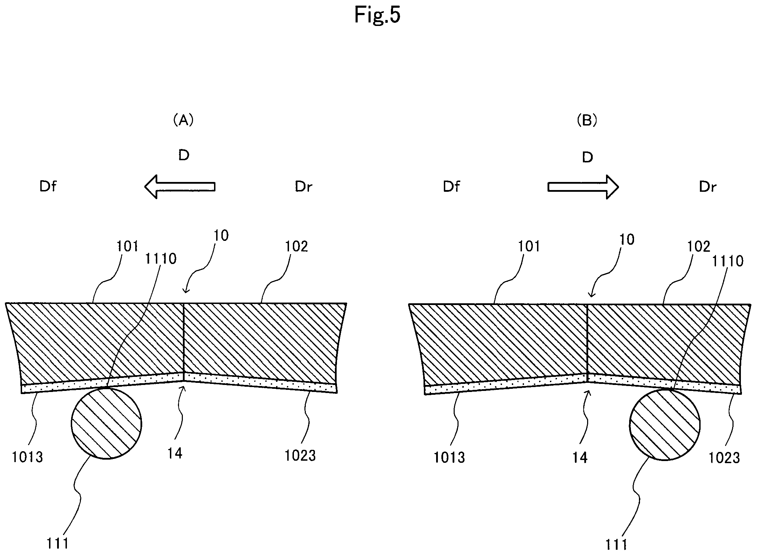

Figs. 5(A) and 5(B) are diagrams for explaining operation of each seismic-isolation device 1 shown in Fig. 1.

When the rack 2 vibrates due to an earthquake or the like, the support part 11 fixed to the arm 31 of the rack 2 also vibrates in synchronization with the vibration of the rack 2. By this, when force acting between the support surface 1110 of the shaft 111 and the first inclined surface 1013 of the first rail 101 and the second inclined surface 1023 of the second rail 102 exceeds the maximum static frictional force, the shaft 111 moves relatively to the rail bearing 10 in the loading/unloading direction D.

Here, as shown in Fig. 5(A), it is assumed that the shaft 111 has moved in relation to the rail bearing 10 toward the loading/unloading direction Df (the one end in the loading/unloading direction D). In this case, the support surface 1110 of the shaft 111 is in contact with only the first inclined surface 1013 of the first rail 101. Since the first inclined surface 1013 is inclined upward from the loading/unloading direction Df toward the loading/unloading direction Dr (the other end in the loading/unloading direction D), force is applied in the direction in which the rail bearing 10 moves in relation to the shaft 111 toward the loading/unloading direction Df.

Further, as shown in Fig. 5(B), it is assumed that the shaft 111 has moved in relation to the rail bearing 10 toward the loading/unloading direction Dr. In this case, the support surface 1110 of the shaft 111 is in contact with only the second inclined surface 1023 of the second rail 102. Since the second inclined surface 1023 is inclined upward from the loading/unloading direction Dr toward the loading/unloading direction Df, force is applied in the direction in which the rail bearing 10 moves in relation to the shaft 111 toward the loading/unloading direction Dr.

As a result, when the vibration of the rack 2 due to an earthquake stops, the rail bearing 10 moves relatively to the shaft 111 such that the shaft 111 is positioned at the boundary 14 between the first inclined surface 1013 of the first rail 101 and the second inclined surface 1023 of the second rail 102, and the rail bearing 10 returns to the original position where the shaft 111 was.

Hereinabove, one embodiment has been described.

In this embodiment, the first inclined surface 1013 and the second inclined surface 1023 are formed on the lower surfaces (the lower surface 1010 of the first rail 101 and the lower surface 1020 of the second rail 102) of the rail bearing 10 attached to the lower surface of the pallet base 30. The first inclined surface 1013 is inclined upward from the one end 1011 toward the other end 1012 in the loading/unloading direction D. And the second inclined surface 1023 is inclined upward from the other end 1022 toward the one end 1021 in the loading/unloading direction D. Accordingly, it is possible to prevent accumulation of dust or the like on the first inclined surface 1013 and the second inclined surface 1023. By this, it is possible to prevent deterioration of the sliding characteristics between the first and second inclined surfaces 1013 and 1023 and the support surface 1110 of the shaft 111. As a result, it is possible to maintain the seismic-isolation performance over a long term.

Further, in the present embodiment, the sliding surface of the rail bearing 10 which comes in sliding contact with the support surface 1110 of the shaft 111 is constructed by the first inclined surface 1013 and the second inclined surface 1023, both of which are inclined linearly. Accordingly, differently from the case where the sliding surface of the rail bearing 10 is formed as an arc surface, resonance of the natural period is not generated. As a result, it is possible to decrease the possibility that the pallet base 30 on which a pallet (not shown) loaded with goods is placed resonates with vibration of an earthquake or the like.

Further, in the present embodiment, it is possible to adjust the sliding range of the rail bearing 10, so that the rail bearing 10 does not move to abut against the stoppers 12 due to small or medium degree of seismic vibration, by adjusting the frictional force between the sliding members 103 (which make the first inclined surface 1013 of the first rail 101 and the second inclined surface 1023 of the second rail 102) and the support surface 1110 of the shaft 111, and by adjusting the frictional force between the rail bearing 10 and the thrust bearing 113 which is positioned between the rail bearing 10 and the shaft holder 112.

Further, in the present embodiment, the rail bearing 10 is constructed by connecting the first rail 101 having the first inclined surface 1013 formed on the lower surface 1010 and the second rail 102 having the second inclined surface 1023 formed on the lower surface 1020. Thus, compared with the case where the first inclined surface 1013 and the second inclined surface 1023 are continuously formed in one rail, machining of the first inclined surface 1013 and the second inclined surface 1023 is easy, and accordingly the costs can be reduced.

Further, the present embodiment provides the pair of stoppers 12 that are attached to respective ends of the rail bearing 10 (at the one end 1011 in the loading/unloading direction D of the first rail 101 and the other end 1022 in the loading/unloading direction D of the second rail 102), to project downward below the lower surfaces (the lower surface 1010 of the first rail 101 and the lower surface 1020 of the second rail 102) of the rail bearing 10. By this, when the rail bearing 10 moves in relation to the support part 11, the shaft 111 abuts against the stoppers 12. Therefore, it is possible to confine the moving range of the rail bearing 10 in the loading/unloading direction D.

Further, in the present embodiment, the fall prevention plate 13 has almost the same width T3 as the width T1 of the rail bearing 10 and is attached to the lower ends 120 of the pair of stoppers 12 and is inserted in the space which is located under the shaft 111 and is enclosed by the arm 31, the shaft 111, and the pair of shaft holders 112. Accordingly, when the rail bearing 10 moves upward in relation to the support part 11, the fall prevention plate 13 abuts against the shaft 111. By this, upward movement of the rail bearing 10 is confined. As a result, it is possible to prevent falling of the pallet 30 attached to the rail bearing 10 from the rack 2.

For example, in the above embodiment, the shaft 111 is cylindrical so that the support surface 1110 which comes in sliding contact with the first inclined surface 1013 of the first rail 101 and the second inclined surface 1023 of the second rail 102 has an arc-shaped cross-section in the loading/unloading direction D. However, the shaft 111 is not needed to be cylindrical. Further, the cross-section shape of the support surface 1110 is not limited to an arc.

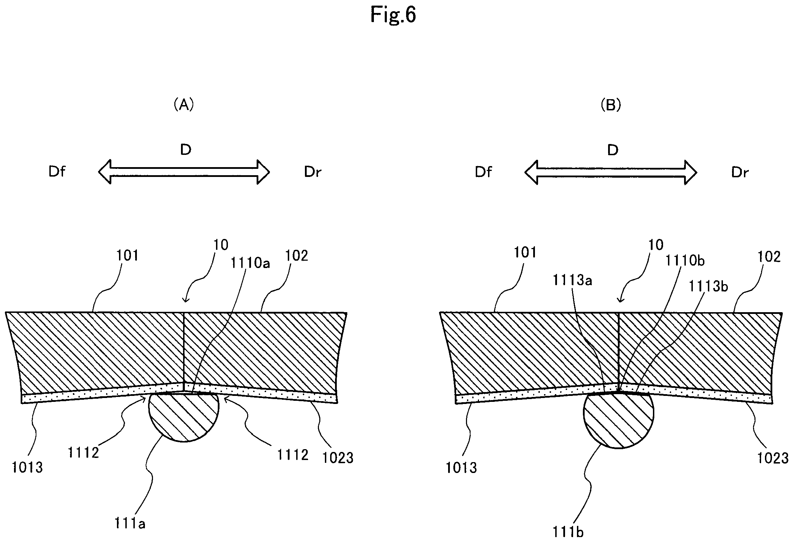

According to the invention, as shown in Fig. 6 (A), a support surface 1110a which comes in sliding contact with the first inclined surface 1013 of the first rail 101 and the second inclined surface 1023 of the second rail 102, has such a shape that is obtained by cutting the cylindrical shaft 111a at the top by a plane perpendicular to a radial direction. And the support surface 1110a comes in sliding contact with the first inclined surface 1013 of the first rail 101 and the second inclined surface 1023 of the second rail 102 at both ends 1112 of the support surface 1110a.

Further, as shown in Fig. 6(B), a support surface 1110b which has a first inclined support surface 1113a and a second inclined support surface 1113b may be formed as the sliding surface of the shaft 111b. The first inclined support surface 1113a is inclined upward from the one end Df toward the other end Dr in the loading/unloading direction D and comes in sliding contact with the first inclined surface 1013 of the first rail 101. The second inclined support surface 1113b is inclined upward from the other end Dr toward the one end Df in the loading/unloading direction D and comes in sliding contact with the second inclined surface 1023 of the second rail 102. In this case, contact between the shaft 111b and the rail bearing 10 can become surface contact, and thus it is possible to reduce abrasion of the shaft 111b due to sliding under a load applied by goods loaded on the pallet (not shown) placed on the pallet base 30.

Further, in the above embodiment, the sliding surface of the rail bearing 10 comes in sliding contact with the support surface 1110 of the shaft 111 and is constructed by the linearly-inclined first and second inclined surfaces 1013 and 1023. The present invention is not limited to this. The sliding surface of the rail bearing 10 may be an arc surface. In this case, the curvature of the arc surface may be changed depending on the horizontal distance from its vertex (the boundary between the first inclined surface 1013 and the second inclined surface 1023).

Further, the seismic-isolation device of the present invention is applied to racks comprising: storage shelves which have pallet bases on which pallets for loading with goods are placed; and arms for supporting the pallet bases from the lower surface side of the pallet bases. Further, the seismic-isolation device of the present invention can be combined with a damper. As this damper, existing one such as a viscosity damper or an oil damper can be used.

### Reference Signs List

1: seismic-isolation device; 2: rack; 3: storage shelf; 10: rail bearing; 11: support part; 12: stopper; 13: fall prevention plate; 14: boundary between first inclined surface 1013 and second inclined surface 1023; 20a, 20b: support post of the rack 2; 30: pallet base; 31, 31a, 31b: arm; 101: first rail; 102: second rail; 103: slidingmember; 111: shaft; 112: shaft holder; 113: thrust bearing; 120: lower end of the stopper 12; 301: lower surface of the pallet base 30; 1011: one end of the first rail 101 in loading/unloading direction D; 1012: the other end of the first 101 in the loading/unloading direction D; 1013: first inclined surface; 1021: one end of the second rail 102 in the loading/unloading direction D; 1022: the other end of the second rail 102 in the loading/unloading direction D; 1023: second inclined surface; 1110, 1110a, 1110b: support surface; 1111: both ends of the shaft 111; 1112: both ends of the support surface 1110a; 1113a: first inclined support surface; and 1113b: second inclined support surface.

## Claims

1. A rack comprising:
a storage shelf (3) which has: a pallet base (30) which is set movable in a loading/unloading direction (D) and on which a pallet for loading with goods is placed; and an arm (31; 31a, 31b) which is fixed to a support post (20a, 20b) and supports the pallet base from a lower surface side of the pallet base; and
a seismic-isolation device (1) for a rack, which is installed between the arm of the storage shelf and the pallet base,
the seismic-isolation device for a rack comprising:
a rail bearing (10) which is set on a lower surface side of the pallet base; and
a support member (11) which is set on the arm and supports the rail bearing,
wherein:
the rail bearing has a first inclined surface (1013) and a second inclined surface (1023) which are formed on a lower surface side of the rail bearing;
the first inclined surface is inclined upward from one end (1011) toward the other end (1012) in the loading/unloading direction;
the second inclined surface is inclined upward from the other end toward the one end in the loading/unloading direction;
the support member has a support surface (1110) that comes in sliding contact with the first inclined surface and the second inclined surface,
**characterised in that**: the support surface (1110a) which comes in sliding contact with the first inclined surface and the second inclined surface has a shape that is obtained by cutting a cylindrical shaft (111a) at the top by a plane perpendicular to a radial direction.

2. The rack according to Claim 1, wherein the rail bearing comprises:
a first rail (101) which has the first inclined surface (1013) formed on a lower surface of the first rail; and
a second rail (102) which has the second inclined surface (1023) formed on a lower surface of the second rail, and one end side of the second rail in the loading/unloading direction (D) is connected with the other end side of the first rail in the loading/unloading direction.

3. The rack according to Claim 1 or 2, wherein:
the first inclined surface (1013) and the second inclined surface (1023) are each formed of a sliding member.

4. The rack according to one of Claims 1 - 3, wherein:
the first inclined surface (1013) and the second inclined surface (1023) are inclined linearly.

5. The rack according to one of Claims 1 - 4, wherein: the support surface (1110a) of the support member (11) is a flat surface.

6. The rack according to one of Claims 1-5, wherein: the support surface (1110a) of the support member (11) is formed of a sliding member.

7. The rack according to one of Claims 1-6, further comprising: a stopper (12) which is fixed to the rail bearing (10) and projects downward below the lower surface of the rail bearing, wherein:
the stopper is adapted to confine a moving range of the rail bearing in relation to the support member (11) by abutting against the support member when the rail bearing moves in relation to the support member in the loading/unloading direction (D).

8. The rack according to Claim 7, further comprising: a fall prevention member (13) which is attached to a lower end of the stopper (12) and is positioned under the support member (11), wherein:
the fall prevention member is adapted to confine upward movement of the rail bearing (10) in relation to the support member by abutting against the support member when the rail bearing moves upward in relation to the support member.

## Patentansprüche

1. Gestell umfassend:
ein Speicherbord (3), das aufweist: eine Palettenbasis (30), die in einer Lade-/Endladerichtung (D) bewegbar eingerichtet ist und auf der eine Palette zum Beladen mit Gütern platziert wird; und einen Arm (31; 31a, 31b), der an einem Halteständer (20a, 20b) fixiert ist und die Palettenbasis von einer unteren Oberflächenseite der Palettenbasis hält; und
eine Vorrichtung (1) für seismische Isolierung für ein Gestell, die zwischen dem Arm des Speicherbords und der Palettenbasis installiert ist,
wobei die Vorrichtung zur seismischen Isolierung für ein Gestell umfasst:
ein Schienenlager (10), das auf einer unteren Oberflächenseite der Palettenbasis eingerichtet ist; und
ein Halteelement (11), das auf dem Arm eingerichtet ist und das Schienenlager hält,
wobei:
das Schienenlager eine erste geneigte Oberfläche (1013) und eine zweite geneigte Oberfläche (1023) aufweist, die auf einer unteren Oberflächenseite des Schienenlagers ausgebildet sind;
die erste geneigte Oberfläche von einem Ende (1011) in der Lade-/Endladerichtung zum anderen Ende (1012) hin nach oben geneigt ist;
die zweite geneigte Oberfläche vom anderen Ende in der Lade-/Entladerichtung zum einen Ende hin nach oben geneigt ist;
das Halteelement eine Haltefläche (1110) aufweist, die mit der ersten geneigten Oberfläche und der zweiten geneigten Oberfläche in Gleitkontakt kommt,
**gekennzeichnet dadurch, dass**
die Haltefläche (1110a), die mit der ersten geneigten Oberfläche und der zweiten geneigten Oberfläche in Gleitkontakt kommt, eine Form aufweist, die durch Schneiden einer zylindrischen Stange (111a) an der Spitze mit einer zu einer radialen Richtung senkrechten Ebene erhalten wird.

2. Gestell nach Anspruch 1, wobei das Schienenlager umfasst:
eine erste Schiene (101), deren erste geneigte Oberfläche (1013) auf einer unteren Oberfläche der ersten Schiene ausgebildet ist; und
eine zweite Schiene (102), deren zweite geneigte Oberfläche (1023) auf einer unteren Oberfläche der zweiten Schiene ausgebildet ist, wobei eine Endseite der zweiten Schiene in der Lade-/Entladerichtung (D) mit der anderen Endseite der ersten Schiene in der Lade-/Entladerichtung verbunden ist.

3. Gestell nach Anspruch 1 oder 2, wobei:
die erste geneigte Oberfläche (1013) und die zweite geneigte Oberfläche (1023) jeweils aus einem Gleitelement gebildet sind.

4. Gestell nach einem der Ansprüche 1 bis 3, wobei:
die erste geneigte Oberfläche (1013) und die zweite geneigte Oberfläche (1023) linear geneigt sind.

5. Gestell nach einem der Ansprüche 1 bis 4, wobei:
die Haltefläche (1110a) des Halteelements (11) eine ebene Fläche ist.

6. Gestell nach einem der Ansprüche 1 bis 5, wobei:
die Haltefläche (1110a) des Halteelements (11) aus einem Gleitelement gebildet ist.

7. Gestell nach einem der Ansprüche 1 bis 6, ferner umfassend:
einen Stopper (12), der am Schienenlager (10) fixiert ist und nach unten unter die untere Oberfläche des Schienenlagers hervorragt, wobei:
der Stopper dazu ausgelegt ist, einen Bewegungsbereich des Schienenlagers in Bezug auf das Halteelement (11) einzuschränken, indem er gegen das Halteelement stößt, wenn sich das Schienenlager bezüglich des Halteelements in der Lade-/Entladerichtung (D) bewegt.

8. Gestell nach Anspruch 7, ferner umfassend:
ein Fallverhinderungselement (13), das an einem unteren Ende des Stoppers (12) angebracht ist und unter dem Halteelement (11) positioniert ist, wobei:
das Fallverhinderungselement dazu ausgelegt ist, die Bewegung des Schienenlagers (10) nach oben in Bezug auf das Halteelement einzuschränken, indem es gegen das Halteelement stößt, wenn sich das Schienenlager bezüglich des Halteelements nach oben bewegt.

## Revendications

1. Palettier comprenant :
une étagère de stockage (3) qui a : une base (30) pour palette qui est installée mobile dans un sens de chargement/déchargement (D) et sur laquelle une palette pour charger des marchandises est placée ; et un bras (31 ; 31a, 31b) qui est fixé à un montant support (20a, 20b) et supporte la base pour palette depuis un côté de surface inférieure de la base pour palette ; et
un dispositif (1) d'isolation sismique pour un palettier, qui est installé entre le bras de l'étagère de stockage et la base pour palette,
le dispositif d'isolation sismique pour un palettier comprenant :
un support (10) de rails qui est installé sur un côté de surface inférieure de la base pour palette ; et
un élément support (11) qui est installé sur le bras et supporte le support de rails,
dans lequel :
le support de rails a une première surface inclinée (1013) et une deuxième surface inclinée (1023) qui sont formées sur un côté de surface inférieure du support de rails ;
la première surface inclinée est inclinée vers le haut d'une extrémité (1011) vers l'autre extrémité (1012) dans le sens de chargement/déchargement ;
la deuxième surface inclinée est inclinée vers le haut de l'autre extrémité vers l'une extrémité dans le sens de chargement/déchargement ;
l'élément support a une surface (1110) de support qui vient en contact coulissant avec la première surface inclinée et la deuxième surface inclinée, **caractérisé en ce que** :
la surface (1110a) de support qui vient en contact coulissant avec la première surface inclinée et la deuxième surface inclinée a une forme qui est obtenue en coupant un arbre cylindrique (111a) au sommet par un plan perpendiculaire à un sens radial.

2. Palettier selon la revendication 1, dans lequel le support de rails comprend :
un premier rail (101) qui a la première surface inclinée (1013) formée sur une surface inférieure du premier rail ; et
un deuxième rail (102) qui a la deuxième surface inclinée (1023) formée sur une surface inférieure du deuxième rail, et un côté d'extrémité du deuxième rail dans le sens de chargement/déchargement (D) est connecté avec l'autre côté d'extrémité du premier rail dans le sens de chargement/déchargement.

3. Palettier selon la revendication 1 ou 2, dans lequel :
la première surface inclinée (1013) et la deuxième surface inclinée (1023) sont chacune constituées d'un élément coulissant.

4. Palettier selon l'une des revendications 1-3, dans lequel :
la première surface inclinée (1013) et la deuxième surface inclinée (1023) sont inclinées linéairement.

5. Palettier selon l'une des revendications 1-4, dans lequel :
la surface (1110a) de support de l'élément support (11) est une surface plate.

6. Palettier selon l'une des revendications 1-5, dans lequel :
la surface (1110a) de support de l'élément support (11) est constituée d'un élément coulissant.

7. Palettier selon l'une des revendications 1-6, comprenant en outre :
une butée d'arrêt (12) qui est fixée au support (10) de rails et se projette vers le bas en-dessous de la surface inférieure du support de rails, dans lequel :
la butée d'arrêt est adaptée à confiner une plage de mouvement du support de rails en relation à l'élément support (11) en butant contre l'élément support lorsque le support de rails se déplace en relation à l'élément support dans le sens de chargement/déchargement (D).

8. Palettier selon la revendication 7, comprenant en outre :
un élément (13) de prévention de chute qui est fixé à une extrémité inférieure de la butée d'arrêt (12) et est positionné sous l'élément support (11), dans lequel :
l'élément de prévention de chute est adapté à confiner un mouvement vers le haut du support (10) de rails en relation à l'élément support en butant contre l'élément support lorsque le support de rails se déplace vers le haut en relation à l'élément support.
